# EUROPÄISCHE PATENTSCHRIFT

(11) **EP 3 778 308 B1**
(45) Veröffentlichungstag und Bekanntmachung des Hinweises auf die Patenterteilung: **28.09.2022**
(21) Anmeldenummer: 20191418.1
(22) Anmeldetag: 17.08.2020
(51) Int. Cl.: B60R 15/00

(54) **NASSZELLE FÜR EIN CAMPINGFAHRZEUG**
WET CELL FOR A CAMPING VEHICLE
CELLULE TECHNIQUE POUR UN VÉHICULE DE CAMPING

(30) Priorität: 16.08.2019 DE 102019122085
(43) Veröffentlichungstag der Anmeldung: 17.02.2021
(73) Patentinhaber: Hymer GmbH & Co. KG, 88339 Bad Waldsee (DE)
(72) Erfinder: Sawetzki, Bernhard, 88364 Wolfegg (DE); Hepe, Dominik, 68212 Ravensburg (DE)
(74) Vertreter: Waller, Stefan

(56) Entgegenhaltungen:
- DE-A1- 2 258 827
- DE-U1- 20 116 364
- DE-U1- 29 815 217
- US-A- 2 508 970

## Beschreibung

Die Erfindung betrifft eine Nasszelle für ein Campingfahrzeug gemäß dem Oberbegriff des Anspruchs 1.

Aus der DE 20 2004 017 165 U1 ist eine Nasszelle für ein Campingfahrzeug bekannt, welche einen unbeweglichen Wandabschnitt mit einer Öffnung und einen beweglichen Wandabschnitt umfasst, wobei die Öffnung durch den beweglichen Wandabschnitt verschlossen ist.

Es ist Aufgabe der Erfindung, eine Nasszelle vorzuschlagen, welche für eine komfortable Benutzung der in der Nasszelle vorhandenen sanitären Einrichtungen eine vorübergehende Vergrößerung ihres Innenraums ermöglicht.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei der Nasszelle für ein Campingfahrzeug, welche einen unbeweglichen Wandabschnitt mit einer Öffnung und einen beweglichen Wandabschnitt umfasst, wobei die Öffnung durch den beweglichen Wandabschnitt verschlossen ist, ist es erfindungsgemäß vorgesehen, dass der bewegliche Wandabschnitt mit einer ersten Seitenkante des unbeweglichen Wandabschnitts durch Gelenkmittel drehgelenkig verbunden ist und dass der bewegliche Wandabschnitt mit einer zweiten Seitenkante des unbeweglichen Wandabschnitts durch Führungsmittel schiebebeweglich verbunden ist. Hierdurch ist es möglich, einen Innenraum der Nasszelle durch ein von dem Innenraum weg gerichtetes Schwenken des beweglichen Wandabschnitts und ein zeitglich hierzu erfolgendes Herausziehen des beweglichen Wandabschnitts zu vergrößern, so dass bei weiterhin durch den unbeweglichen und den beweglichen Wandabschnitt verschlossener Nasszelle der Innenraum der Nasszelle verschlossen ist.

Weiterhin ist es vorgesehen, dass der bewegliche Wandabschnitt ein starres Wandsegment und ein flexibles Wandsegment umfasst. Hierdurch ist es möglich, einen Teil des beweglichen Wandabschnitts platzsparend anzuordnen, wenn der Innenraum der Nasszelle unvergrößert ist.

Es ist auch vorgesehen, das flexible Wandsegment an eine in einen Innenraum der Nasszelle weisenden Innenseite des unbeweglichen Wandabschnitts anzubinden und das flexible Wandsegment als Lamellenwand auszubilden. Hierdurch lässt sich das flexible Wandelement neben dem unbeweglichen Wandabschnitt in dem Innenraum der Nasszelle flexibel anordnen.

Durch eine Ausbildung der Führungsmittel für das flexible Wandelement als eine untere Kulissenführung und eine obere Kulissenführung lässt sich das flexible Wandelement zuverlässig führen.

Weiterhin ist es vorgesehen, die untere Kulissenführung durch eine untere Nut zu bilden, welche in einem Laufboden der Nasszelle ausgebildet ist, und die obere Kulissenführung durch eine obere Nut zu bilden, welche in einer Decke der Nasszelle ausgebildet ist. Auf diese Weise lässt sich das flexible Wandelement mit minimalem bautechnischen Aufwand führen.

Es ist auch vorgesehen, dass der bewegliche Wandabschnitt wahlweise
- entweder in einer ersten Stellung steht, in welcher das starre Wandsegment mit einer zwischen einer Innenseite und einer Außenseite des starren Wandsegments verlaufenden Stirnseite an einer Stirnseite des unbeweglichen Wandabschnitts anliegt,
- oder in einer zweiten Stellung steht, in welcher das flexible Wandsegment vollständig ausgefahren ist,
- oder in beliebige Zwischenstellungen zwischen der ersten Stellung und der zweiten Stellung steht. Hierdurch lässt sich ein Volumen des Innenraums der Nasszelle einfach an die jeweiligen Erfordernisse anpassen.

Weiterhin ist es vorgesehen, dass die Nasszelle eine Zugangstüre umfasst, wobei die Zugangstüre in dem starren Wandsegment des beweglichen Wandabschnitts ausgebildet ist. Hierdurch ist ein es möglich, den Innenraum der Nasszelle unabhängig von der Stellung des beweglichen Wandabschnitts durch das starre Wandsegment zu betreten und zu verlassen

Es ist auch vorgesehen, dass die Nasszelle weiterhin eine drehbare Schwenkwand, ein Waschbecken und eine Toilette umfasst, wobei das Waschbecken an der Schwenkwand befestigt ist, wobei die Schwenkwand in einer ersten Stellung parallel zu dem unbeweglichen Wandabschnitt ausgerichtet ist, wobei die Schwenkwand in der zweiten Stellung des beweglichen Wandelements derart in eine zweite Stellung schwenkbar ist, dass das Waschbecken wenigstens teilweise über der Toilette positioniert ist und dass die Schwenkwand den Innenraum der Nasszelle in einen Duschraum und einen Nebenraum teilt und dass eine dem Waschbecken gegenüber liegende Rückseite der Schwenkwand für den Duschraum einen Spritzschutz bildet. Hierdurch lässt sich in dem Innenraum ein komfortabler Duschraum bilden.

Schließlich ist es vorgesehen, dass die Kulissenführungen jeweils einen bogenförmig Führungsabschnitt und einen mäanderförmigen, insbesondere U-förmigen Führungsabschnitt umfassen. Hierdurch kann das flexible Wandsegment einer Drehbewegung des starren Wandsegments unter Ausbildung eines gewölbten Wandsegments folgen und hierdurch lässt sich das flexible Wandsegment kompakt parken.

Weitere Einzelheiten der Erfindung werden in der Zeichnung anhand eines schematisch dargestellten Ausführungsbeispiels beschrieben.

Hierbei zeigt
- Figur 1: eine perspektivische Ansicht einer in einem Campingfahrzeug angeordneten Nasszelle, wobei ein beweglicher Wandabschnitt in einer ersten Stellung steht,
- Figur 2: eine weitere perspektivische Ansicht der in der Figur 1 gezeigten Nasszelle, wobei der bewegliche Wandabschnitt in einer zweiten Stellung steht und
- Figur 3: eine weitere perspektivische Ansicht der in den Figuren 1 und 2 gezeigten Nasszelle, wobei eine Schwenkwand zur Bildung eines Duschraums in eine zweite Stellung geschwenkt ist.

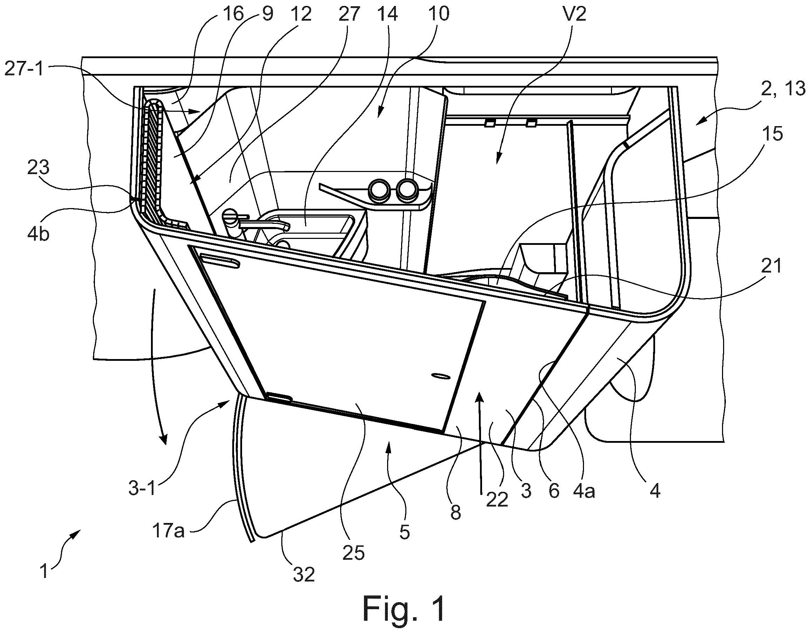

In der Figur 1 ist eine perspektivische Ansicht einer in einem Campingfahrzeug 1 angeordneten Nasszelle 2 gezeigt, wobei ein beweglicher Wandabschnitt 3 in einer ersten Stellung 3-1 steht.

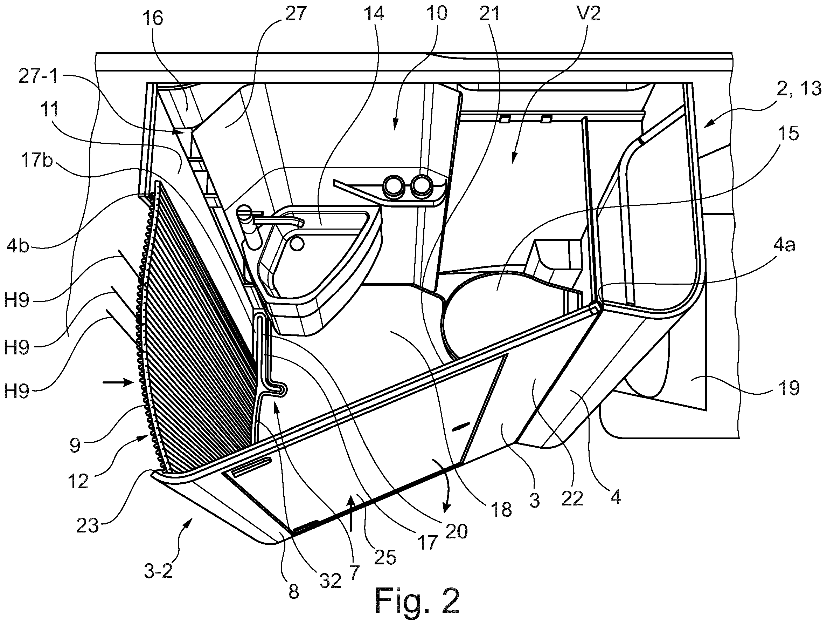

Die Nasszelle 2 umfasst neben dem beweglichen Wandabschnitt 3 einen in Draufsicht C-förmigen und unbeweglichen Wandabschnitt 4 mit einer Öffnung 5. Die Öffnung 5 ist durch den beweglichen Wandabschnitt 3 verschlossen. Der bewegliche Wandabschnitt 3 ist mit einer ersten Seitenkante 4a des unbeweglichen Wandabschnitts 4 durch Gelenkmittel 6 drehgelenkig verbunden. Weiterhin ist der bewegliche Wandabschnitt 3 mit einer zweiten Seitenkante 4b des unbeweglichen Wandabschnitts 4 durch Führungsmittel 7 (siehe Figur 2) schiebebeweglich verbunden. Beide Seitenkanten 4a, 4b verlaufen vertikal im Raum.

Der bewegliche Wandabschnitt 3 umfasst ein starres Wandsegment 8 und ein flexibles Wandsegment 9. Hierbei ist das starre Wandsegment 8 der ersten Seitenkante 4a des unbeweglichen Wandabschnitts 4 zugeordnet und hierbei das flexible Wandsegment 9 der zweiten Seitenkante 4b des unbeweglichen Wandabschnitts 4 zugeordnet.

Entsprechend ist das flexible Wandsegment 9 an eine in einen Innenraum 10 der Nasszelle 2 weisende Innenseite 11 (siehe Figur 2) des unbeweglichen Wandabschnitts 4 angebunden. Das flexible Wandsegment 9 ist als um exemplarisch dargestellte Hochachsen H9 (siehe Figur 2) biegbare Lamellenwand 12 ausgebildet.

Als Sanitäreinrichtungen 13 umfasst die Nasszelle 2 ein Waschbecken 14, eine Toilette 15 und eine Duschsäule 16.

Die Führungsmittel 7 umfassen eine untere Kulissenführung 17 und eine nicht dargestellte obere Kulissenführung. Diese liegen sich in Bezug auf eine parallel zu einem Laufboden 18 8siehe Figur 2) der Nasszelle 2 ausgerichtete, gedachte Ebene 19 (siehe Figur 2) spiegelbildlich gegenüber. In diesen Kulissenführungen 17 ist das flexible Wandsegment 9 geführt.

Die untere Kulissenführung 17 ist durch eine untere Nut 20 (siehe Figur 2) gebildet, welche in dem Laufboden 18 der Nasszelle 2 ausgebildet ist. Die obere, nicht dargestellte Kulissenführung ist durch eine obere, nicht dargestellte Nut gebildet, welche in einer nicht dargestellten Decke der Nasszelle 2 ausgebildet ist.

Die Figur 2 zeigt eine weitere perspektivische Ansicht der in der Figur 1 gezeigten Nasszelle 2, wobei der bewegliche Wandabschnitt 3, welcher das starre Wandsegment 8 und das flexible Wandsegment 9 umfasst, in einer zweiten Stellung 3-2 steht.

Aus einer vergleichenden Betrachtung der Figuren 1 und 2 ist erkennbar, dass zur Veränderung eines Volumens V2 der Nasszelle 2 der bewegliche Wandabschnitt 3 wahlweise
- entweder in die erste Stellung 3-1 (siehe Figur 1) bewegbar ist, in welcher das starre Wandsegment 8 mit einer zwischen einer Innenseite 21 und einer Außenseite 22 des starren Wandsegments 8 verlaufenden Stirnseite 23 an der Stirnseite 4b des unbeweglichen Wandabschnitts 4 anliegt,
- oder in die zweite Stellung 3-2 (siehe Figur 2) bewegbar ist, in welcher das flexible Wandsegment 9 aus den Führungsmitteln 7 vollständig ausgefahren ist,
- oder in beliebige, nicht dargestellte Zwischenstellungen zwischen der ersten Stellung 3-1 (siehe Figur 1) und der zweiten Stellung 3-2 (siehe Figur 2) bewegbar ist.

Die Nasszelle 2 umfasst eine Zugangstüre 25, wobei die Zugangstüre 25 in dem starren Wandsegment 8 des beweglichen Wandabschnitts 3 ausgebildet und als Drehtür 26 ausgeführt ist. Gemäß einer nicht dargestellten Ausführungsvariante ist es auch vorgesehen, die Zugangstüre 25 als Schiebetür auszuführen.

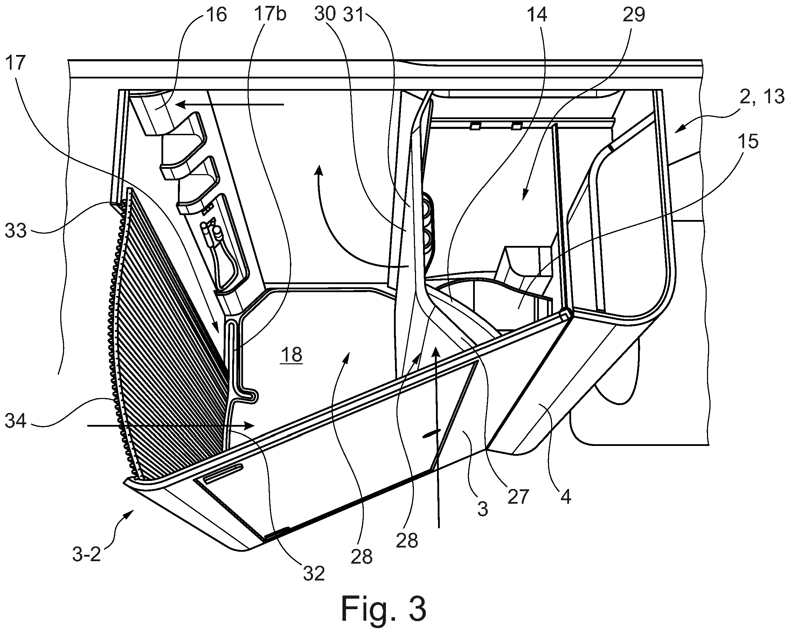

In der Figur 3 ist eine weitere perspektivische Ansicht der in den Figuren 1 und 2 gezeigten Nasszelle 2 dargestellt, wobei hier eine Schwenkwand 27, welche in den Figuren 1 und 2 in einer ersten Stellung 27-1 steht, zur Bildung eines Duschraums 28 in eine zweite Stellung 27-2 geschwenkt ist.

Das Waschbecken 14 ist an der Schwenkwand 27 befestigt und mit dieser bewegbar. Die Schwenkwand 27 ist in der ersten Stellung 27-1 (siehe Figuren 1 und 2) parallel zu dem unbeweglichen Wandabschnitt 4 ausgerichtet und verdeckt die Duschsäule 16.

Die Schwenkwand 27 lässt sich, sofern das bewegliche Wandelement 3 in der zweiten Stellung 3-2 steht, derart über den Laufboden 18 schwenken, dass das Waschbecken 14 wenigstens teilweise über der Toilette 15 positioniert ist und dass die Schwenkwand 27 den Innenraum 10 der Nasszelle 2 in den Duschraum 28 und einen Nebenraum 29 teilt und dass eine dem Waschbecken 14 gegenüber liegende Rückseite 30 der Schwenkwand 27 für den Duschraum 28 einen Spritzschutz 31 bildet (siehe Figur 3).

Die Kulissenführungen 17 umfassen jeweils einen bogenförmig Führungsabschnitt 17a (siehe Figur 1) und einen U-förmigen Führungsabschnitt 17b (siehe Figuren 2, 3). In den Laufboden 18 ist eine den Duschraum 28 umlaufende Ablaufrinne 32 integriert

Weiterhin ist an dem unbeweglichen Wandabschnitt 4 ein Rollo 33 angeordnet, dass mit dem starren Wandsegment verbunden ist, in der ersten Stellung 3-1 des beweglichen Wandabschnitts 3 ist dieses aufgerollt und in der zweiten Stellung 3-2 des beweglichen Wandabschnitts 3 ist dieses derart abgerollt, dass das flexible Wandsegment 9 von einem Rollobelag 34 überdeckt.

## Patentansprüche

1. Nasszelle für ein Campingfahrzeug (1) umfassend einen unbeweglichen Wandabschnitt (4) mit einer Öffnung (5) und einen beweglichen Wandabschnitt (3), wobei die Öffnung (5) durch den beweglichen Wandabschnitt (3) verschlossen ist,
**dadurch gekennzeichnet,**
**dass** der bewegliche Wandabschnitt (3) mit einer ersten Seitenkante (4a) des unbeweglichen Wandabschnitts (4) durch Gelenkmittel (6) drehgelenkig verbunden ist und dass der bewegliche Wandabschnitt (3) mit einer zweiten Seitenkante (4b) des unbeweglichen Wandabschnitts (4) durch Führungsmittel (7) schiebebeweglich verbunden ist.

2. Nasszelle nach Anspruch 1,
**dadurch gekennzeichnet,**
**dass** der bewegliche Wandabschnitt (3) ein starres Wandsegment (8) und ein flexibles Wandsegment (9) umfasst.

3. Nasszelle nach Anspruch 2,
**dadurch gekennzeichnet,**
**dass** das flexible Wandsegment (9) an eine in einen Innenraum (10) der Nasszelle (2) weisende Innenseite (11) des unbeweglichen Wandabschnitts (4) angebunden ist und dass das flexible Wandsegment (9) als Lamellenwand (12) ausgebildet ist.

4. Nasszelle nach Anspruch 1 bis 3,
**dadurch gekennzeichnet,**
**dass** die Führungsmittel (7) eine untere Kulissenführung (17) und eine obere Kulissenführung umfassen, in welcher das flexible Wandsegment (9) geführt ist.

5. Nasszelle nach Anspruch 4,
**dadurch gekennzeichnet,**
**dass** die untere Kulissenführung (17) durch eine untere Nut (20) gebildet ist, welche in einem Laufboden (18) der Nasszelle (2) ausgebildet ist, und dass die obere Kulissenführung durch eine obere Nut gebildet ist, welche in einer Decke der Nasszelle (2) ausgebildet ist.

6. Nasszelle nach wenigstems einem der vorhergehenden Ansprüche,
**dadurch gekennzeichnet,**
**dass** der bewegliche Wandabschnitt (3) wahlweise
- entweder in einer ersten Stellung (3-1) steht, in welcher das starre Wandsegment (8) mit einer zwischen einer Innenseite (21) und einer Außenseite (22) des starren Wandsegments (8) verlaufenden Stirnseite (23) an einer Stirnseite (4b) des unbeweglichen Wandabschnitts (4) anliegt,
- oder in einer zweiten Stellung (3-2) steht, in welcher das flexible Wandsegment (9) ausgefahren ist,
- oder in beliebige Zwischenstellungen zwischen der ersten Stellung (3-1) und der zweiten Stellung (3-2) steht.

7. Nasszelle nach wenigstems einem der vorhergehenden Ansprüche,
**dadurch gekennzeichnet,**
**dass** die Nasszelle (2) eine Zugangstüre (25) umfasst, wobei die Zugangstüre (25) in dem starren Wandsegment (8) des beweglichen Wandabschnitts (3) ausgebildet ist.

8. Nasszelle nach wenigstems einem der vorhergehenden Ansprüche,
**dadurch gekennzeichnet,**
**dass** die Nasszelle (2) weiterhin eine drehbare Schwenkwand (27), ein Waschbecken (14) und eine Toilette (15) umfasst, wobei das Waschbecken (14) an der Schwenkwand (27) befestigt ist, wobei die Schwenkwand (27) in einer ersten Stellung (27-1) parallel zu dem unbeweglichen Wandabschnitt (4) ausgerichtet ist, wobei die Schwenkwand (27) in der zweiten Stellung (3-2) des beweglichen Wandelements (3) derart in eine zweite Stellung (27-2) schwenkbar ist, dass das Waschbecken (14) wenigstens teilweise über der Toilette (15) positioniert ist und dass die Schwenkwand (27) den Innenraum (10) der Nasszelle (2) in einen Duschraum (28) und einen Nebenraum (29) teilt und dass eine dem Waschbecken (14) gegenüber liegende Rückseite (30) der Schwenkwand (27) für den Duschraum (28) einen Spritzschutz (31) bildet.

9. Nasszelle nach wenigstems einem der vorhergehenden Ansprüche,
**dadurch gekennzeichnet,**
**dass** die Kulissenführungen (17) jeweils einen bogenförmig Führungsabschnitt (17a) und einen mäanderförmigen, insbesondere U-förmigen Führungsabschnitt (17b) umfassen.

## Claims

1. Wet cell for a camping vehicle (1), comprising an immovable wall portion (4) having an opening (5), and a movable wall portion (3), wherein the opening (5) is closed by the movable wall portion (3),
**characterized in that**
the movable wall portion (3) by way of articulation means (6) is connected in a rotational articulated manner to a first lateral edge (4a) of the immovable wall portion (4), and **in that** the movable wall portion (3) by way of guide means (7) is connected in a displaceable manner to a second lateral edge (4b) of the immovable wall portion (4).

2. Wet cell according to Claim 1,
**characterized in that**
the movable wall portion (3) comprises a rigid wall segment (8) and a flexible wall segment (9).

3. Wet cell according to Claim 2,
**characterized in that**
the flexible wall segment (9) is attached to an internal side (11) of the immovable wall portion (4) that points into an interior (10) of the wet cell (2), and **in that** the flexible wall segment (9) is configured as a louvre wall (12).

4. Wet cell according to Claims 1 to 3,
**characterized in that**
the guide means (7) comprise a lower slotted guide (17) and an upper slotted guide in which the flexible wall segment (9) is guided.

5. Wet cell according to Claim 4,
**characterized in that**
the lower slotted guide (17) is formed by a lower groove (20) which is configured in a flooring (18) of the wet cell (2), and **in that** the upper slotted guide is formed by an upper groove which is configured in a ceiling of the wet cell (2).

6. Wet cell according to at least one of the preceding claims,
**characterized in that**
the movable wall portion (3) selectively either
- is in a first position (3-1) in which the rigid wall segment (8) by way of an end side (23) that runs between an internal side (21) and an external side (22) of the rigid wall segment (8) bears on an end side (4b) of the immovable wall portion (4); or
- is in a second position (3-2) in which the flexible wall segment (9) is deployed; or
- is in arbitrary intermediate positions between the first position (3-1) and the second position (3-2) .

7. Wet cell according to at least one of the preceding claims,
**characterized in that**
the wet cell (2) comprises an access door (25), wherein the access door (25) is configured in the rigid wall segment (8) of the movable wall portion (3) .

8. Wet cell according to at least one of the preceding claims,
**characterized in that**
the wet cell (2) furthermore comprises a rotatable pivoting wall (27), a washbasin (14) and a toilet (15), wherein the washbasin (14) is fastened to the pivoting wall (27), wherein the pivoting wall (27) in a first position (27-1) is aligned so as to be parallel to the immovable wall portion (4), wherein the pivoting wall (27) in the second position (3-2) of the movable wall element (3) is pivotable to a second position (27-2) in such a manner that the washbasin (14) is at least partially positioned above the toilet (15) and that the pivoting wall (27) divides the interior (10) of the wet cell (2) into a shower room (28) and an ancillary room (29), and that a rear side (30) of the pivoting wall (27) that lies opposite the washbasin (14) forms a splash protection (31) for the shower room (28).

9. Wet cell according to at least one of the preceding claims,
**characterized in that**
the slotted guides (17) comprise in each case one arcuate guide portion (17a) and one meandering, in particular U-shaped, guide portion (17b).

## Revendications

1. Salle d'eau pour un véhicule de camping (1), comprenant une section de paroi immobile (4) avec une ouverture (5) et une section de paroi mobile (3), l'ouverture (5) étant fermée par la section de paroi mobile (3),
**caractérisée en ce que**
la section de paroi mobile (3) est reliée de manière articulée en rotation à un premier bord latéral (4a) de la section de paroi immobile (4) par des moyens d'articulation (6) et **en ce que** la section de paroi mobile (3) est reliée de manière mobile en coulissement à un deuxième bord latéral (4b) de la section de paroi immobile (4) par des moyens de guidage (7).

2. Salle d'eau selon la revendication 1,
**caractérisée en ce que**
la section de paroi mobile (3) comprend un segment de paroi rigide (8) et un segment de paroi flexible (9).

3. Salle d'eau selon la revendication 2,
**caractérisée en ce que**
le segment de paroi flexible (9) est relié à un côté intérieur (11) de la section de paroi immobile (4) orienté vers un espace intérieur (10) de la salle d'eau (2) et **en ce que** le segment de paroi flexible (9) est configuré sous forme de paroi à lamelles (12).

4. Salle d'eau selon les revendications 1 à 3,
**caractérisée en ce que**
les moyens de guidage (7) comprennent un guide à coulisse inférieur (17) et un guide à coulisse supérieur dans lequel le segment de paroi flexible (9) est guidé.

5. Salle d'eau selon la revendication 4,
**caractérisée en ce que**
le guide à coulisse inférieur (17) est formé par une rainure inférieure (20) qui est réalisée dans un plancher (18) de la salle d'eau (2), et **en ce que** le guide à coulisse supérieur est formé par une rainure supérieure qui est réalisée dans un plafond de la salle d'eau (2).

6. Salle d'eau selon au moins l'une quelconque des revendications précédentes,
**caractérisée en ce que**
la section de paroi mobile (3) se trouve au choix
- soit dans une première position (3-1), dans laquelle le segment de paroi rigide (8) s'appuie par un côté frontal (23) s'étendant entre un côté intérieur (21) et un côté extérieur (22) du segment de paroi rigide (8) contre un côté frontal (4b) de la section de paroi immobile (4),
- soit dans une deuxième position (3-2) dans laquelle le segment de paroi flexible (9) est déployé,
- soit dans toute position intermédiaire entre la première position (3-1) et la deuxième position (3-2).

7. Salle d'eau selon au moins l'une quelconque des revendications précédentes,
**caractérisée en ce que**
la salle d'eau (2) comprend une porte d'accès (25), la porte d'accès (25) étant réalisée dans le segment de paroi rigide (8) de la section de paroi mobile (3).

8. Salle d'eau selon au moins l'une quelconque des revendications précédentes,
**caractérisée en ce que**
la salle d'eau (2) comprend en outre une paroi pivotante rotative (27), un lavabo (14) et des toilettes (15), le lavabo (14) étant fixé à la paroi pivotante (27), la paroi pivotante (27) étant dirigée parallèlement à la section de paroi immobile (4) dans une première position (27-1), la paroi pivotante (27) pouvant pivoter dans une deuxième position (3-2) de l'élément de paroi mobile (3) dans une deuxième position (27-2) de telle sorte que le lavabo (14) est positionné au moins partiellement au-dessus des toilettes (15) et **en ce que** la paroi pivotante (27) divise l'espace intérieur (10) de la salle d'eau (2) en un espace douche (28) et un espace annexe (29) et **en ce qu'**un côté arrière (30) de la paroi pivotante (27), situé à l'opposé du lavabo (14), forme une protection contre les projections (31) pour l'espace douche (28).

9. Salle d'eau selon au moins l'une quelconque des revendications précédentes,
**caractérisée en ce que**
les guides à coulisse (17) comprennent chacun une section de guidage en forme d'arc (17a) et une section de guidage en forme de méandre, notamment en forme de U (17b) .
